# EUROPÄISCHE PATENTSCHRIFT

(11) **EP 1 445 500 B1**
(45) Veröffentlichungstag und Bekanntmachung des Hinweises auf die Patenterteilung: **11.04.2007**
(21) Anmeldenummer: 03028460.8
(22) Anmeldetag: 12.12.2003
(51) Int. Cl.: F16C 3/03, F16C 33/74

(54) **Längenausgleich einer Kreuzgelenkwelle**
Telescopic cardan shaft
Arbre de transmission téléscopique à joint de cardan

(30) Priorität: 22.01.2003 DE 10302578
(43) Veröffentlichungstag der Anmeldung: 11.08.2004
(73) Patentinhaber: Spicer Gelenkwellenbau GmbH, 45143 Essen (DE)
(72) Erfinder: Müller, Erhard, 45529 Hattingen (DE); Schultze, Hans-Jürgen, 46240 Bottrop (DE); Meineke, Manfred, 58454 Witten (DE)
(74) Vertreter: Harwardt, Günther

(56) Entgegenhaltungen:
- US-A- 5 299 982

## Beschreibung

Die Erfindung betrifft einen Längenausgleich einer Kreuzgelenkwelle umfassend
- eine Längsachse,
- ein rohrförmiges erstes Wellenelement,
   - das eine Längsbohrung mit einer Innenverzahnung mit sich parallel zur Längsachse erstreckenden umfangsverteilten Zähnen aufweist,
   - das eine kreiszylindrische Außenfläche aufweist,
   - das nahe einem ersten Ende mindestens eine um die Längsachse umlaufend in der Außenfläche angeordnete Ringnut aufweist,
- ein zweites Wellenelement,
   - das in seiner Außenfläche eine zur Innenverzahnung passende, darin einsitzende und entlang der Längsachse verstellbare Außenverzahnung aufweist und
   - das an einem Ende mit einer Gelenkgabel verbunden ist,
- eine rohrförmige Dichthülse, welche
   - koaxial mit Spiel um zumindest einen Teil der Erstreckung der Außenfläche des ersten Wellenelementes entlang der Längsachse angeordnet ist,
   - mit einem Ende mit dem zweiten Wellenelement oder der damit verbundenen Gelenkgabel verbunden ist und
   - eine kreiszylindrische Innenfläche aufweist, die der Außenfläche des ersten Wellenelementes zugewandt ist, und
   - mindestens einen Dichtring, der in mindestens einer Ringnut sitzt und an der Innenfläche der Dichthülse dichtend anliegt.

In der US 5 299 982 A ist eine Kreuzgelenkwelle mit einem Längenausgleich beschrieben. Sie umfaßt ein dickwandiges rohrförmiges erstes Wellenelement, das über ein Rohr mit einer Gelenkgabel eines Kreuzgelenkes verbunden ist. Das erste Wellenelement weist eine auf der Längsachse zentrierte Längsbohrung auf, die mit einer Innenverzahnung mit sich parallel zur Längsachse erstreckenden umfangsverteilten Zähnen versehen ist. Das erste Wellenelement weist ferner eine Außenfläche auf, die kreiszylindrisch gestaltet ist und nahe einem ersten Ende, das der Gelenkgabel entfernt ist, eine um die Längsachse umlaufend in der Außenfläche angeordnete Ringnut besitzt. Sie ist zylindrisch ausgebildet mit einer parallel zur Längsachse sich erstreckenden Basisfläche. Es ist ein zweites Wellenelement vorgesehen, das in seiner Außenfläche eine zur Innenverzahnung passende Außenverzahnung aufweist. Diese ist mit einer Gelenkgabel verbunden und sitzt mit der Außenverzahnung entlang der Längsachse verschiebbar in der Längsbohrung des ersten Wellenelements. Ferner ist eine rohrförmige Dichthülse vorgesehen, die mit der Gelenkgabel durch eine Schweißnaht verbunden ist, die das zweite Wellenelement trägt. Die Dichthülse ist koaxial um das zweite Wellenelement angeordnet und reicht bis über die Außenfläche des ersten Wellenelementes. Sie ist mit ihrer Innenfläche mit Spiel zur Außenfläche des ersten Wellenelementes angeordnet. Zwischen beiden befindet sich ein Dichtring, der in der Ringnut des ersten Wellenelementes mit axialem Spiel einsitzt. Der Dichtring umfaßt einen Basisabschnitt, der sich gegen die Basisfläche der Ringnut mit Vorspannung anlegt und eine von diesem vorstehende Dichtlippe zur Anlage an der Innenfläche der Dichthülse. Der Dichtring erfordert eine besondere angepaßte Herstellung, d.h. er ist aufwendig hinsichtlich seiner Herstellung.

Der Erfindung liegt die Aufgabe zugrunde, einen Längenausgleich einer Kreuzgelenkwelle zu schaffen, der eine wirksame Abdichtung aufweist, bei dem insbesondere der zur Abdichtung erforderliche Dichtring kostengünstig herstellbar ist.

Zur Lösung dieser Aufgabe ist erfindungsgemäß vorgesehen,
- daß die mindestens eine Ringnut eine kegelige erste Ringfläche aufweist, die einen ersten Kegelwinkel bildet, der sich von dem ersten Ende weg öffnet, und einen zur ersten Ringfläche winklig angeordnete kegelige zweite Ringfläche aufweist, die einen zweiten Kegelwinkel bildet, welcher sich zu dem ersten Ende hin öffnet und größer bemessen ist als der erste Kegelwinkel und
- daß je Ringnut jeweils ein Dichtring vorgesehen ist,
   - welcher im Ausgangszustand einen außen und innen kreiszylindrischen Ring darstellt und
   - der im montierten Zustand zumindest zu einem Ende hin aufgeweitet ist und mit seiner Ringinnenfläche an der kegeligen ersten Ringfläche anliegt.

Von Vorteil bei dieser Ausbildung ist, daß ein kostengünstiges Ausgangsmaterial für den Dichtring gewählt werden kann. Der Dichtring wird praktisch bei der Montage ausgehend von einem außen und innen kreiszylindrischen Ring so umgeformt, daß sich eine Dichtkante ergibt, mit der der Dichtring an der Innenfläche der Dichthülse anliegt. Ferner kann ein engerer Radialspalt zwischen der Innenfläche der Dichthülse und der Außenfläche des ersten Wellenelements vorgesehen werden, so daß weniger Schmutz in den Bereich eintreten kann.

Vorzugsweise beträgt der erste Kegelwinkel zwischen 10 und 70 Grad. Hierdurch ist gewährleistet, daß keine Überbeanspruchung des Ringes bei der Montage entsteht, jedoch günstige Verhältnisse hinsichtlich der Anstellung des Dichtringes zu der Innenfläche der Dichthülse gegeben sind. Entsprechend ist für den zweiten Kegelwinkel vorgesehen, daß dieser zwischen 120 und 160 Grad beträgt.

Eine günstige Abdichtung wird erzielt, wenn zwei Ringnuten vorgesehen sind und je Ringnut ein Dichtring vorhanden ist. Dabei wirkt der dem ersten Ende entfernt liegende zweite Dichtring als Abstreifer und der erste Dichtring, der dem ersten Ende nahe ist, wird geschützt, so daß er seine Dichtwirkung über einen langen Zeitraum aufrechterhält.

In Ausgestaltung der Erfindung ist vorgesehen, daß sich der Dichtring mit einer ersten Stirnfläche an der zweiten Ringfläche abstützt und mit einer Ringkante, die im Stoßbereich zwischen seiner Ringaußenfläche und einer der ersten Stirnfläche abgewandten zweiten Stirnfläche gebildet ist, über die Außenfläche des ersten Wellenelementes vorsteht und an der Innenfläche der Dichthülse anliegt. Vorzugsweise ist vorgesehen, daß der Dichtring aus einem Elastomer oder einem Kunststoff auf der Basis Polytetrafluorethylen (PTFE) besteht.

Ein bevorzugtes Ausführungsbeispiel der Erfindung ist in der Zeichnung dargestellt.

Es zeigt
- Figur 1: schematisch den Aufbau einer Kreuzgelenkwelle mit dem erfindungsgemäßen Längenausgleich,
- Figur 2: einen Abschnitt des Längenausgleichs im vergrößerten Maßstab im Längsschnitt und
- Figur 3: einen Längsschnitt eines Dichtringes vor der Montage am ersten Wellenelement.

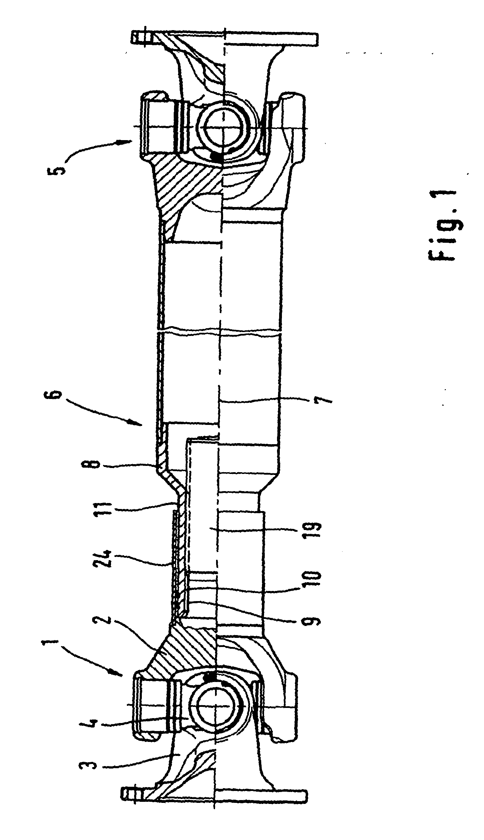

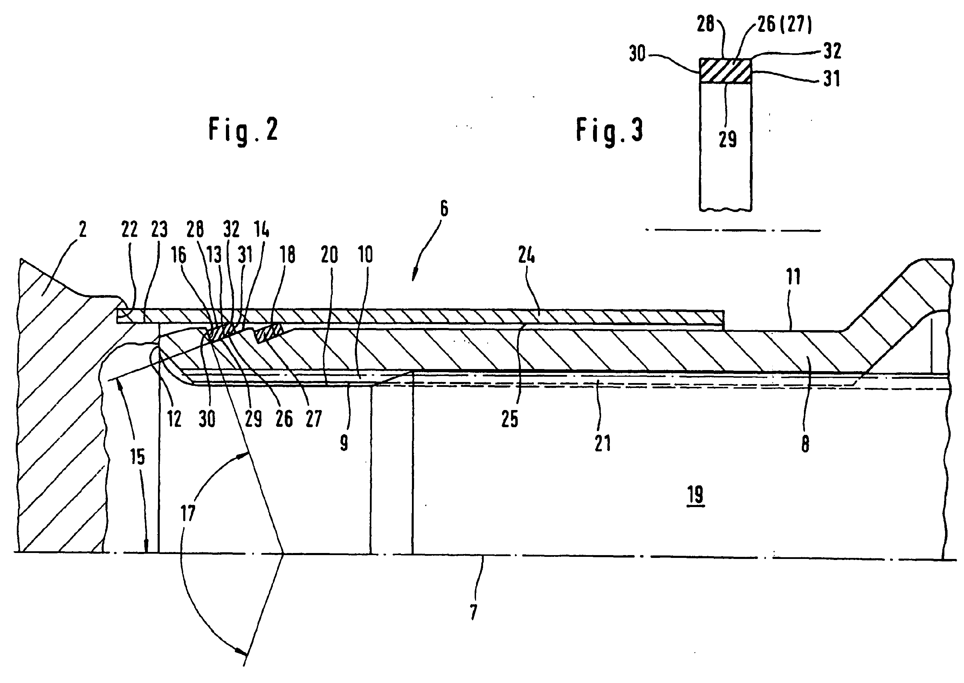

Aus Figur 1 ist eine Kreuzgelenkwelle mit einem ersten Kreuzgelenk 1 ersichtlich, das eine erste Gelenkgabel 2 und eine zweite Gelenkgabel 3 aufweist, die durch ein Zapfenkreuz 4 gelenkig miteinander verbunden sind. Ferner umfaßt die Kreuzgelenkwelle ein zweites Kreuzgelenk 5. Dieses ist entsprechend dem ersten Kreuzgelenk 1 gestaltet. Die beiden Kreuzgelenke 1, 5 sind durch einen Längenausgleich 6 verbunden, der auf der Längsachse 7 zentriert ist. Wie insbesondere aus Figur 2 ersichtlich, umfaßt der Längenausgleich 6 ein erstes Wellenelement 8, das auf der Längsachse 7 zentriert ist und eine Längsbohrung 9 besitzt, in der sich eine Innenverzahnung 10 mit um die Längsachse 7 umfangsverteilten Zähnen befindet. Die Zähne verlaufen parallel zur Längsachse 7.

Das erste Wellenelement 8 umfaßt eine kreiszylindrische Außenfläche 11, die ihrem ersten Ende 12 nahe mit einer ersten Ringnut 13 versehen ist. Diese erste Ringnut 13 umfaßt eine erste Ringfläche 14, die kegelig gestaltet ist und einen ersten Kegelwinkel 15 in der Größenordnung von 10 bis 70 Grad bildet, der sich vom ersten Ende 12 weg öffnet. Winklig zur kegeligen ersten Ringfläche 14 ist eine kegelige zweite Ringfläche 16 angeordnet, die einen zweiten Kegelwinkel 17 einschließt, der größer bemessen ist als der erste Kegelwinkel 15 und zwischen 120 und 160 Grad beträgt. Der zweite Kegelwinkel 17 öffnet sich in Richtung zum ersten Ende 12. Eine zweite Ringnut 18, die entsprechend der ersten Ringnut 13 gestaltet ist, ist mit Abstand zur ersten Ringnut 13, dem ersten Ende 12 entfernt, in die Außenfläche 11 des ersten Wellenelements 8 eingearbeitet. Das erste Wellenelement ist ggf. unter Zwischenschaltung eines Rohres mit einer Gelenkgabel des zweiten Kreuzgelenkes 5 verbunden. Mit der ersten Gelenkgabel 2 des ersten Kreuzgelenkes 1 ist ein zweites Wellenelement 19 verbunden, das zunächst anschließend an die erste Gelenkgabel 2 einen Abschnitt 20 aufweist, der im Verhältnis zu dem daran entlang der Längsachse 7 anschließenden und mit einer Außenverzahnung 21 versehenen Abschnitt im Durchmesser reduziert ist. Die Außenverzahnung 21 des zweiten Wellenelements 19 ist an die Innenverzahnung 10 des ersten Wellenelements 8 angepaßt und sitzt in der Innenverzahnung 10 der Längsbohrung 9 entlang der Längsachse 7 verschiebbar ein. Zwischen dem ersten Wellenelement 8 und dem zweiten Wellenelement 19 kann aufgrund der beiden Verzahnungen 10, 21 eine Drehmitnahme um die Längsachse 7 erfolgen. In der ersten Gelenkgabel 2 ist zu dem zweiten Wellenelement 19 hin eine Nut 22 eingearbeitet, die eine Sitzfläche 23 bildet. In diese Nut greift eine rohrförmige Dichthülse 24 mit einem Ende ein. Diese ist durch eine Verformung des Materials der ersten Gelenkgabel 2 im Bereich der Nut 22 gesichert. Die Dichthülse 24 besitzt eine Innenfläche 25, die der Außenfläche 11 des ersten Wellenelements 8 gegenüberliegt und zu dieser mit radialem Spiel angeordnet ist. Zwischen der Innenfläche 25 und dem ersten Wellenelement 8 ist ein erster Dichtring 26 wirksam, der in der ersten Ringnut 13 sitzt. In der zweiten Ringnut 18 sitzt ein zweiter Dichtring 27. Da beide Ringnuten 13, 18 gleich gestaltet sind, sind auch die beiden zweiten Dichtringe 26, 27 gleich.

In Figur 3 ist die Ausgangsform, d.h. die Herstellungsform der beiden Dichtringe 26, 27 ersichtlich. Es handelt sich vor der Montage um außen und innen kreiszylindrische Dichtringe 26, 27, die eine kreiszylindrische Ringaußenfläche 28 und kreiszylindrische Ringinnenfläche 29 besitzen. Die beiden Dichtringe 26, 27 besitzen eine erste Stirnfläche 30 und eine zweite Stirnfläche 31. Nach der Montage der beiden Dichtringe 26, 27 in den beiden Ringnuten 13, 18 nehmen diese eine kegelige Form an, wie sie aus Figur 2 ersichtlich ist. Durch die Verformung der beiden Dichtringe 26, 27 kommt deren Ringinnenfläche 29 zu der kegeligen ersten Ringfläche 14 zur Anlage. Dabei stützt sich die erste Stirnfläche 30 gegen die zweite Ringfläche 16 ab. Der Stoßbereich zwischen der zweiten Stirnfläche 31 und der Ringaußenfläche 28 bildet dadurch eine über die Außenfläche 11 des ersten Wellenelements 8 vorstehende Ringkante 32, die zur Anlage gegen die Innenfläche 25 der Dichthülse 24 kommt. Der gleiche Aufbau gilt für den zweiten Dichtring 27, der sich in der zweiten Ringnut 18 befindet. Dieser bildet, weil er dem freien Ende der Dichthülse 24 näher liegt, einen Abstreifring, der dafür sorgt, daß in den Spalt zwischen der Innenfläche 25 der Dichthülse 24 und der Außenfläche 11 des ersten Wellenelementes 8 eindringender Schmutz herausgeschoben wird.

### Bezugszeichenliste

- 1: erstes Kreuzgelenk
- 2: erste Gelenkgabel
- 3: zweite Gelenkgabel
- 4: Zapfenkreuz
- 5: zweites Kreuzgelenk
- 6: Längenausgleich
- 7: Längsachse
- 8: erstes Wellenelement
- 9: Längsbohrung
- 10: Innenverzahlung
- 11: Außenfläche des ersten Wellenelementes
- 12: erstes Ende
- 13: erste Ringnut
- 14: erste Ringfläche
- 15: erster Kegelwinkel
- 16: zweite Ringfläche
- 17: zweiter Kegelwinkel
- 18: zweite Ringnut
- 19: zweites Wellenelement
- 20: durchmesserreduzierter Abschnitt
- 21: Außenverzahnung
- 22: Nut
- 23: Sitzfläche
- 24: Dichthülse
- 25: Innenfläche
- 26: erster Dichtring
- 27: zweiter Dichtring
- 28: Ringaußenfläche
- 29: Ringinnenfläche
- 30: erste Stirnfläche
- 31: zweite Stirnfläche
- 32: Ringkante

## Patentansprüche

1. Längenausgleich einer Kreuzgelenkwelle umfassend
- eine Längsachse (7),
- ein rohrförmiges erstes Wellenelement (8),
- das eine Längsbohrung (9) mit einer Innenverzahnung (10) mit sich parallel zur Längsachse (7) erstreckenden umfangsverteilten Zähnen aufweist,
- das eine kreiszylindrische Außenfläche (11) aufweist,
- das nahe einem ersten Ende (12) mindestens eine um die Längsachse (7) umlaufend in der Außenfläche (11) angeordnete Ringnut (13,18) aufweist,
- ein zweites Wellenelement (19),
- das in seiner Außenfläche eine zur Innenverzahnung (10) passende, darin einsitzende und entlang der Längsachse (7) verstellbare Außenverzahnung (21) aufweist und
- das an einem Ende mit einer Gelenkgabel (2) verbunden ist,
- eine rohrförmige Dichthülse (24), welche
- koaxial mit Spiel um zumindest einen Teil der Erstreckung der Außenfläche (11) des ersten Wellenelementes (8) entlang der Längsachse (7) angeordnet ist,
- mit einem Ende mit dem zweiten Wellenelement (19) oder der damit verbundenen Gelenkgabel (2) verbunden ist und
- eine kreiszylindrische Innenfläche (25) aufweist, die der Außenfläche (11) des ersten Wellenelementes (8) zugewandt ist, und
- mindestens einen Dichtring (26, 28), der in mindestens einer Ringnut (₁₃, 18) sitzt und an der Innenfläche (25) der Dichthülse (24) dichtend anliegt,
**dadurch gekennzeichnet,**
- **daß** die mindestens eine Ringnut (13, 18) eine kegelige erste Ringfläche (14) aufweist, die einen ersten Kegelwinkel (15) bildet, der sich von dem ersten Ende (12) weg öffnet, und einen zur ersten Ringfläche (14) winklig angeordnete kegelige zweite Ringfläche (16) aufweist, die einen zweiten Kegelwinkel (17) bildet, welcher sich zu dem ersten Ende (12) hin öffnet und größer bemessen ist als der erste Kegelwinkel (15) und
- **daß** je Ringnut (13, 18) jeweils ein Dichtring (26, 27) vorgesehen ist,
- welcher im Ausgangszustand einen außen und innen kreiszylindrischen Ring darstellt und
- der im montierten Zustand zumindest zu einem Ende hin aufgeweitet ist und mit seiner Ringinnenfläche (29) an der kegeligen ersten Ringfläche (14) anliegt.

2. Längenausgleich nach Anspruch 1,
**dadurch gekennzeichnet,**
**daß** der erste Kegelwinkel (15) zwischen 10 Grad und 70 Grad beträgt.

3. Längenausgleich nach Anspruch 1,
**dadurch gekennzeichnet,**
**daß** der zweite Kegelwinkel (17) zwischen 120 Grad und 160 Grad beträgt.

4. Längenausgleich nach Anspruch 1,
**dadurch gekennzeichnet,**
**daß** zwei Ringnuten (13, 18) und je Ringnut (13, 18) ein Dichtring (26, 27) vorgesehen sind.

5. Längenausgleich nach Anspruch 1,
**dadurch gekennzeichnet,**
**daß** sich der Dichtring (26, 27) mit einer ersten Stirnfläche (30) an der zweiten Ringfläche (16) abstützt und mit einer Ringkante (32), die im Stoßbereich zwischen seiner Ringaußenfläche (28) und einer der ersten Stirnfläche (30) abgewandten zweiten Stirnfläche (31) gebildet ist, über die Außenfläche (11) des ersten Wellenelementes (8) vorsteht und an der Innenfläche (25) der Dichthülse (24) anliegt.

6. Längenausgleich nach Anspruch 1,
**dadurch gekennzeichnet,**
**daß** der Dichtring (26, 27) aus einem Elastomer besteht.

7. Längenausgleich nach Anspruch 1,
**dadurch gekennzeichnet,**
**daß** der Dichtring (26, 27) aus einem Kunststoff auf der Basis Polytetrafluorethylen (PTFE) besteht.

## Claims

1. Length compensation of a universal joint shaft comprising
- a longitudinal axis (7),
- a tubular first shaft element (8),
- which has a longitudinal bore (9) with an inner toothing (10) with circumferentially distributed teeth extending parallel to the longitudinal axis (7),
- which has a circular cylindrical outer face (11),
- which has close to a first end (12) at least one annular groove (13, 18), extending around the longitudinal axis (7) in the outer face (11),
- a second shaft element (19),
- which has in its outer face an outer toothing (21) fitting to the inner toothing (10) and resting therein and displaceably therein along the longitudinal axis (7), and
- which is connected at one end to a joint yoke (2),
- a tubular sealing sleeve (24),
- which is arranged coaxially with a clearance around at least a portion of the extension of the outer face (11) of the first shaft element (8) along the longitudinal axis (7),
- which is connected with one end to the second shaft element (19) or the joint yoke (2) connected thereto, and
- which has a circular cylindrical inner face (25), which is facing the outer face (11) of the first shaft element (8), and
- which has at least one sealing ring (26, 28), which rests at least in one annular groove (13, 18) and abuts in a sealing manner the inner face (25) of the sealing sleeve (24),
**characterised in**
- **that** the at least one annular groove (13, 18) has a conical first annular face (14), which forms a first angle of taper (15), which opens away from the first end (12) and has a conical second annular face (16) arranged at an angle to the first annular face (14) and forms a second angle of taper (17) which opens towards the first end (12) and is dimensioned larger than the first angle of taper (15) and
- **that** for each annular groove (13, 18), respectively, a sealing ring (26, 27) is provided,
- which represents in the initial state an outside and inside circular cylindrical ring and
- which in the assembled condition is expanded at least towards one end and abuts with its inner ring face (29) the conical first annular face (14).

2. Length compensation according to claim 1,
**characterised in that**
the first angle of taper (15) is between 10 degrees and 70 degrees.

3. Length compensation according to claim 1,
**characterised in that**
the second angle of taper (17) is between 120 degrees and 160 degrees.

4. Length compensation according to claim 1,
**characterised in that**
two annular grooves (13, 18) are provided and that for each annular groove (13, 18) one sealing ring (26, 27) is provided.

5. Length compensation according to claim 1,
**characterised in that**
the sealing ring (26, 27) is supported with a first end face (30) on the second annular face (16) and projects with a ring edge (32), which is formed in the abutment area between its outer ring face (28) and a second end face (31) facing away from the first end face (30), beyond the outer face (11) of the first shaft element (8) and abuts the inner face (25) of the sealing sleeve (24).

6. Length compensation according to claim 1,
**characterised in that**
the sealing ring (26, 27) is made from an elastomer.

7. Length compensation according to claim 1,
**characterised in that**
the sealing ring (26, 27) is made from a plastic material on the basis of polytetrafluor ethylene (PTFE).

## Revendications

1. Dispositif de compensation en longueur d'un arbre de transmission à joint de Cardan, comportant
- un axe longitudinal (7),
- un premier élément d'arbre (8) tubulaire,
- qui présente un perçage longitudinal (9) pourvu d'une denture intérieure (10) avec des dents réparties à la périphérie et s'étendant parallèlement à l'axe longitudinal (7),
- qui présente une surface extérieure (11) cylindrique à base circulaire,
- qui présente à proximité d'une première extrémité (12) au moins une gorge annulaire (13, 18) ménagée autour de l'axe longitudinal (7) à la périphérie dans la surface extérieure (11),
- un second élément d'arbre (19),
- qui présente dans sa surface extérieure une denture extérieure (21) adaptée à la denture intérieure (10), logée dans celle-ci et réglable le long de l'axe longitudinal (7), et
- qui est relié par une extrémité à une fourche de joint (2),
- un manchon d'étanchéité (24) tubulaire, qui
- est agencé coaxialement avec jeu autour d'une partie au moins de l'extension de la surface extérieure (11) du premier élément d'arbre (8) le long de l'axe longitudinal (7),
- est relié par une extrémité au second élément d'arbre (19) ou à la fourche de joint (2) reliée à celui-ci, et
- présente une surface intérieure (25) cylindrique à base circulaire, qui est tournée vers la surface extérieure (11) du premier élément d'arbre (8), et
- au moins un joint annulaire (26, 28) qui est logé dans au moins une gorge annulaire (13, 18) et qui s'appuie avec étanchement contre la surface intérieure (25) du manchon d'étanchéité (24),
**caractérisé en ce que**
- ladite au moins une gorge annulaire (13, 18) présente une première surface annulaire conique (14) qui forme un premier angle conique (15) qui s'ouvre en éloignement de la première extrémité (12), et elle présente une seconde surface annulaire conique (16) agencée sous un angle par rapport à la première surface annulaire (14), qui forme un second angle conique (17) qui s'ouvre vers la première extrémité (12) et qui est dimensionné plus grand que le premier angle conique (15), et
- **en ce que** pour chaque gorge annulaire (13, 18) est prévu un joint annulaire respectif (26, 27),
- qui, dans l'état initial, représente un anneau cylindrique à base circulaire à l'extérieur et à l'intérieur, et
- qui, dans l'état monté, est évasé vers au moins une extrémité et prend appui par sa surface intérieure annulaire (29) contre la première surface annulaire conique (14).

2. Dispositif de compensation en longueur selon la revendication 1,
**caractérisé en ce que**
le premier angle conique (15) est compris entre 10° et 70°.

3. Dispositif de compensation en longueur selon la revendication 1,
**caractérisé en ce que**
le second angle conique (17) est compris entre 120° et 160°.

4. Dispositif de compensation en longueur selon la revendication 1,
**caractérisé en ce que**
il est prévu deux gorges annulaires (13, 18) et pour chaque gorge annulaire (13, 18) il est prévu un joint annulaire respectif (26, 27).

5. Dispositif de compensation en longueur selon la revendication 1,
**caractérisé en ce que**
le joint annulaire (26, 27) s'appuie par une première surface frontale (30) contre la seconde surface annulaire (16), et au moyen d'une arête annulaire (32) formée dans la zone de jointure entre sa surface extérieure annulaire (28) et une seconde surface frontale (31) détournée de la première surface frontale (30), il dépasse au-delà de la surface extérieure (11) du premier élément d'arbre (8) et prend appui contre la surface intérieure (25) du manchon d'étanchéité (24).

6. Dispositif de compensation en longueur selon la revendication 1,
**caractérisé en ce que**
le joint annulaire (26, 27) est constitué d'un élastomère.

7. Dispositif de compensation en longueur selon la revendication 1,
**caractérisé en ce que**
le joint annulaire (26, 27) est constitué d'une matière plastique à base de polytétrafluoroéthylène (PTFE).
